# FASCICULE DE BREVET EUROPEEN

(11) **EP 0 466 078 B1**
(45) Date de publication et mention de la délivrance du brevet: **14.02.1996**
(21) Numéro de dépôt: 91111354.6
(22) Date de dépôt: 08.07.1991
(51) Int. Cl.: H04Q 11/04, H04Q 3/00

(54) **Unité de raccordement d'abonnés, à autonomie d'acheminement, pour réseau de télécommunication ayant une structure de réseau intelligent**
Teilnehmeranschlusseinheit mit autonomer Leitungsweglenkung für ein Fernmeldenetz mit intelligenter Struktur
Subscriber connection unit with self routing for a telecommunication network having an intelligent network structure

(30) Priorité: 11.07.1990 FR 9008838; 28.09.1990 FR 9012005
(43) Date de publication de la demande: 15.01.1992
(73) Titulaire: ALCATEL CIT, F-75008 Paris (FR)
(72) Inventeur: Ballard, Michel, F-92140 Clamart (FR); Issenmann, Edouard, F-78150 le Chesnay (FR)
(74) Mandataire: Weinmiller, Jürgen

(56) Documents cités:
- EP-A- 0 125 605
- DE-A- 3 609 890
- CONFERENCE RECORD, IEEE GLOBAL TELECOMMUNICATIONS CONFERENCE, 28 NOV. -1 DEC. 1988, VOL.3 PAGES 1211-1220, HOLLYWOOD US N. SKAPERDA: 'The EWSD Today, Plans for Tomorrow'
- CONFERENCE RECORD, IEEE GLOBAL TELECOMMUNICATIONS CONFERENCE, 28 NOV.-1 DEC. 1988, VOL.3 PAGES 1200-1204, HOLLYWOOD US R.F. KURTZ ET AL: 'DCO Networking Solutions to the Provision of Advanced Features in Rural and Suburban Telephone Networks'
- EUROPEAN TRANSACTIONS ON TELECOMMUNICATIONS AND RELATED TECHNOLOGIES vol. 1, no. 1, Janvier 1990, MILANO IT pages 17 - 30; M. BALLARD ET AL: 'Digital Cellular Mobile-Radio System ECR900'
- PROCEEDINGS OF THE NATIONAL COMMUNICATIONS FORUM, 30 SEPT. 1988, PAGES 1272-1279, CHICAGO US J.P. LODWIG: 'Stand Alone vs Remote'
- CONFERENCE RECORD, IEEE INTERNATIONAL CONFERENCEON COMMUNICATIONS '86, 22-25 JUIN 1986, VOL. 2 PAGES 1094-1099, TORONTO CN M.M. WIENSHIENK: 'GTD-5EAX Remote Switching Unit'
- TELCOM REPORT vol. 5, no. 4, 1982, MüNCHEN DE pages 262 - 266; K. FRIESER ET AL: 'Digital Concentrators in the EWSD Telephone Switching System'
- BELL LABORATORIES RECORD, FEV. 1980, VOL. 58 NO.2 PAGES 63-68, MURRAY HILL US R. SEVCIK ET AL: 'Custom Calling Comes to Clarksville'

## Description

L'invention concerne une unité de raccordement d'abonnés, à autonomie d'acheminement, pour un réseau de télécommunication ayant une structure de réseau intelligent, ce réseau comportant des commutateurs et des points de commande de service commandant ces commutateurs.

Classiquement, les abonnés sont reliés aux commutateurs par des unités de raccordement d'abonnés. Chaque unité de raccordement est raccordée à un commutateur par des canaux téléphoniques et par un canal n° 7 acheminant la signalisation conformément au protocole n° 7 du C.C.I.T.T. Les unités de raccordement sont situées à proximité du commutateur de rattachement ou à une certaine distance.

Les communications entre deux abonnés transitent obligatoirement par le commutateur, bien que cela constitue un rallongement du chemin suivi par ces communications, dans les cas où une communication est établie entre deux abonnés raccordés à une même unité, ou à deux unités très voisines. L'article intitulé : "Le Commutateur, Pièce Maîtresse du RNIS" dans Communication et Transmission n° 3, 1987, page 73 et suivantes, décrit une unité de raccordement (Centre Satellite Numérique) du système ALCATEL E10. L'article intitulé "L'AXE 10 en France", dans Commutation et Transmission n° 4, 1988, page 54, décrit une autre unité de raccordement d'abonnés. Ces deux unités de raccordement comportent des fonctions de secours permettant une autonomie d'acheminement des communications locales, en cas de coupure du canal sémaphore vers le commutateur de rattachement. Mais ces fonctions sont très limitées. Les unités de raccordement n'ont pas d'autonomie pour communiquer avec d'autres unités de raccordement situées à proximité ; ni avec des centres de commutation locaux, plus proches que le centre de rattachement. L'acheminement des communications locales utilise donc systématiquement des ressources de transmission, entre chaque unité de raccordement et son centre de rattachement, alors que le chemin le plus court ne passerait pas forcément par le centre de rattachement.

Le document IEEE Global Telecommunication Conference and Exhibition, Hollywood USA, November 28-December 1, 1988, vol 3, pages 1211-1220, N.SAPERDA, "The EWSD today, plans for tomorrow" décrit des unités de raccordement qui peuvent communiquer entre unités raccordées à un même centre de rattachement, grâce à des liaisons entre elles, et grâce à des ccntrôleurs de service autonome. Mais elles ne sont pas reliées à un point de commande de service par des liaisons de signalisation (CCITT N°7) indépendantes des liaisons téléphoniques. Elles ne permettent donc pas d'établir une communication entre une unité de raccordement et un central local différent de son centre de rattachement.

L'architecture des réseaux actuels résulte donc d'un compromis entre : une architecture comportant peu de commutateurs et des unités de raccordement éloignées de ces commutateurs, ce qui se traduit par un coût minimal pour la commutation et un coût maximal pour la transmission ; et une architecture comportant beaucoup de commutateurs et des unités de raccordement proches des commutateurs, ce qui se traduit par un coût minimal pour la transmission et un coût maximal pour la commutation.

Le but de l'invention est de proposer une unité de raccordement supprimant ce dilemme, c'est-à-dire permettant de réduire le coût de transmission, sans augmenter le nombre de commutateurs.

Selon l'invention, une unité de raccordement d'abonnés, à autonomie d'acheminement, pour un réseau de télécommmunication ayant une structure de réseau intelligent, ce réseau comportant des commutateurs commandés par des points de commande de service, au moyen d'opérations prédéterminées appelées interface de réseau intelligent et supportées par des protocoles compatibles avec le protocole n° 7 du C.C.I.T.T ; reliée : à un commutateur dit centre de rattachement par des liaisons téléphoniques ; et à un point de commande de service par une première liaison de signalisation n° 7 classique, pour gérer l'accès des abonnés au centre de rattachement ;
est caractérisée en ce qu'elle est reliée en outre à un point de commande de service par une seconde liaison de signalisation n° 7 supportant l'interface de réseau intelligent, pour gérer par ledit point de commande de service : des connexions établies par ladite unité entre des abonnés reliés à la même unité, ou des connexions établies vers une autre unité, ou des connexions établies vers le réseau, sans que ces connexions nécessitent une liaison par le centre de rattachement.

Etant donné que l'exploitation téléphonique prévoit la fourniture de diverses tonalités et de messages vocaux aux abonnés locaux ou distants, il s'ensuit que cette unité de raccordement doit donc comprendre des moyens coûteux pour engendrer de telles tonalités et messages.

Selon une autre caractéristique, l'unité de raccordement d'abonnés, est en outre reliée, par des liaisons semi-permanentes, au centre de rattachement et/ou à un ou plusieurs centres locaux du réseau public commuté, sur les voies desquelles lui sont fournies, à partir de générateurs prévus dans ces centres, des tonalités et messages à transmettre aux abonnés locaux ou distants, quand l'exploitation le demande.

Par ailleurs, il est en outre prévu que lesdites premières et secondes liaisons de signalisation sont non seulement supportées physiquement par un même canal de signalisation n°7, mais aussi emploient un même protocole entre un seul point de signalisation dans l'unité de raccordement et un seul point de signalisation dans le point de commande de service, protocole étendu pour permettre la télécommande de l'unité de raccordement et comprenant les fonctionnalités de l'interface d'accès des abonnés au centre de rattachement, par exemple l'interface A du GSM, et au moins un sous-ensemble de celles de l'interface du réseau intelligent ou d'un équivalent fonctionnel de celui-ci.

En outre, selon une autre caractéristique, les moyens définis précédemment sont aménagés pour permettre, par télécommande d'une première et d'une deuxième unités de raccordement, par les liaisons de signalisation les reliant à leur centre de rattachement, l'établissement d'une connexion de transfert prolongeant une communication provenant d'un centre local et empruntant une liaison de communication directe entre ce centre local et ladite première unité de raccordement, vers ladite deuxième unité de raccordement, laquelle dépend du même centre de rattachement ou non, par une liaison directe entre les deux unités de raccordement considérées, puis, plus tard et de la même manière, le cas échéant, vers une troisième unité de raccordement.

Pour le cas où les deux unités de raccordement dépendent de centres de rattachement différents, ces derniers sont aménagés pour échanger les informations nécessaires pour la télécommande des deux unités de raccordement concernées, par enrichissement du protocole de signalisation circulant sur une liaison de signalisation qui les relie.

Avantageusement, on prévoira de même le renvoi de la communication vers le centre de rattachement, par une des liaisons de communication existant entre l'une quelconque des unités de raccordement et le centre de rattachement.

L'invention sera mieux comprise et d'autres détails apparaîtront à l'aide de la description ci-dessous et des figures l'accompagnant :
- la figure 1 représente le schéma synoptique d'un premier exemple de réseau intelligent comportant des unités de raccordement, selon l'art antérieur, pour des abonnés à un service de radiotéléphonie cellulaire ;
- la figure 2 représente le schéma synoptique d'un second exemple de réseau intelligent comportant des unités de raccordement, selon l'invention, pour des abonnés à un service de radiotéléphonie cellulaire ;
- la figure 3 représente le schéma synoptique d'une variante de ce second exemple de réseau;
- la figure 4 représente le schéma synoptique d'une autre variante de ce second exemple de réseau.

Les exemples de réseaux intelligents qui sont décrits ci-dessous rendent un service de radiotéléphonie cellulaire, mais l'invention est applicable aussi aux unités de raccordement d'abonnés de réseaux rendant d'autres services, si le réseau comporte des points de commande de service, lui donnant une structure de réseau intelligent en centralisant les données relatives à un service ainsi que la logique de traitement de ce service.
Exemples : Réseau de téléphonie sans fil, par bornes ; réseau de télécommunication personnelle (Personal communication Network) ; réseau privé (PABX) ; réseau publique de téléphonie ou de transmission de données.

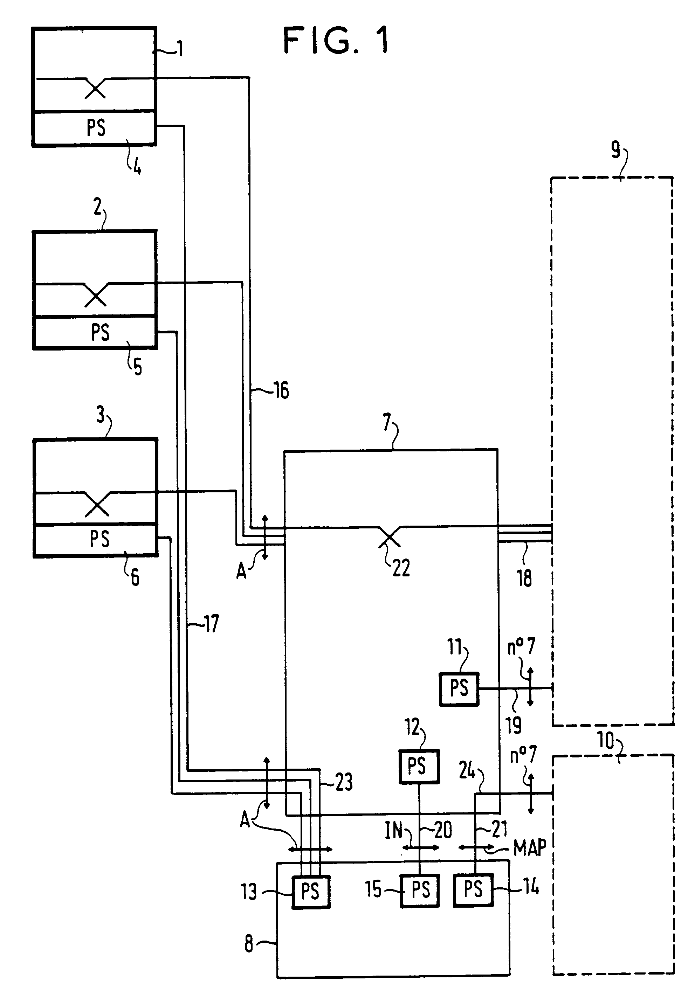

L'exemple de réseau représenté sur la figure 1 comporte :
- trois unités de raccordement d'abonnés, 1 à 3, réalisées selon l'art antérieur et qui sont reliées aux abonnés par des stations d'émission-réception radio non représentées ;
- un centre de rattachement 7, qui est relié à un réseau public commuté 9, pour permettre l'accès des abonnés reliés aux unités 1 à 3 vers le réseau public 9 ;
- un point de commande du service radio, 8, qui est relié à un réseau radio mobile 10, comportant d'autres commutateurs et d'autres points de commande de service, non représentés.

Les unités de raccordement 1, 2, 3 sont reliées à des entrées-sorties d'une matrice de connexions 22 du centre de rattachement 7, par des liaisons de parole 16, conformes à l'interface A définie par le groupe Spécial Mobile (GSM). Les entrées-sorties de la matrice de connexions 22 sont reliées au réseau public commuté 9, par des liaisons de parole, 18. La matrice de connexions 22 permet aux abonnés mobiles qui sont raccordés aux unités 1, 2, 3, d'accéder au service de radiotéléphonie cellulaire, et éventuellement d'accéder à d'autres services.

Les unités de raccordement 1, 2, 3 comportent respectivement des points de signalisation (PS) 4, 5, 6, reliés à des entrées-sorties du centre de rattachement 7 par des liaisons de signalisation 17 conformes à l'interface A du GSM et permettant de gérer l'accès des abonnés reliés aux unités 1, 2, 3, au centre de rattachement 7. Le centre de rattachement 7 relie les liaisons 17 à un point de signalisation 13, du point de commande du service radio, 8, par des connexions semi-permanentes 23.

Le centre de rattachement 7 possède un point de signalisation 11 relié au réseau public commuté 9 par une liaison 19 pour échanger des messages de signalisation classique, associés aux liaisons de parole 18. Ces messages sont conformes au protocole n° 7 du C.C.I.T.T.

Un point de signalisation 12 du centre de rattachement 7 est relié en permanence à un point de signalisation 15 du point de commande du service radio, 8, par une liaison 20. Le point de commande du service radio, 8, a pour fonction de télécommander le centre 7 pour rendre le service. Par la liaison 20, il dialogue avec le centre de rattachement 7 au moyen d'un jeu d'opérations prédéterminées qui constituent une interface dite de réseau intelligent, notée IN sur les figures. Ce jeu d'opérations est, par exemple, celui décrit dans l'article "Digital Cellular Mobile-Radio System ECR 900, dans "European Transactions on Telecommunications and Related Technologies" n° 1 vol.1, 1990, page 17, figure 5. Ce jeu d'opérations, connu, est supporté par des protocoles compatibles avec le protocole n° 7 du C.C.I.T.T.

Un point de signalisation 14 du point de commande 8 est relié à une entrée-sortie du centre de rattachement 7 par une liaison de signalisation 21. Une liaison semi-permanente 24, établie par le centre de rattachement 7, relie la liaison 21 au réseau radiomobile 10. La liaison 21-24 est conforme au protocole n° 7 du C.C.I.T.T. Elle achemine des messages de signalisation propres au réseau radiomobile 10, selon un protocole appellé Sous-Système d'Application Mobile, et noté MAP, qui est compatible avec le protocole n° 7. Le réseau radiomobile 10 comporte notamment un enregistreur de localisation nominal, et un centre d'authentification. Un enregistreur de localisation de visiteurs est situé soit dans le réseau 10, soit dans le point de commande 8.

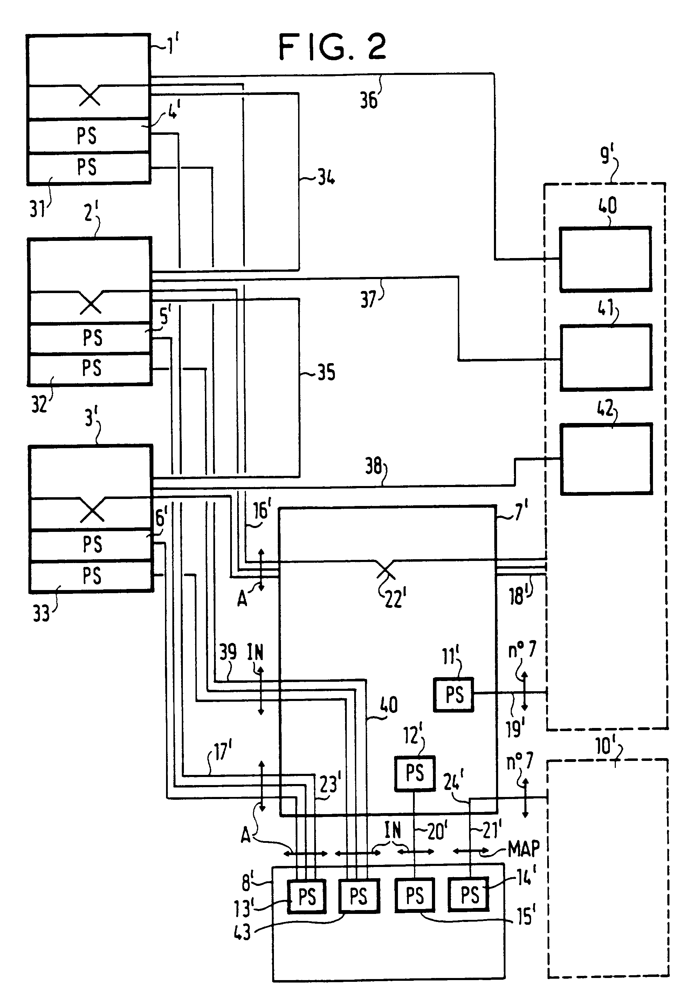

La figure 2 représente le schéma synoptique d'un réseau de radiotéléphonie cellulaire comportant : des unités de raccordement d'abonnés, 1', 2', 3', selon l'invention ; un centre de rattachement 7' un point de commande du service radio 8' ; un réseau public commuté 9' ; et un réseau radiomobile 10'.

Les unités de raccordement 1', 2', 3' comportent des points de signalisation 4', 5', 6' analogues aux points de signalisation 4, 5, 6 des unités de raccordements 1, 2, 3 décrites précédemment. Les éléments de ce réseau qui sont analogues à ceux du réseau décrit précédemment et représenté sur la figure 1, portent respectivement les mêmes références numériques avec l'indice prime, et ils jouent un rôle analogue. C'est notamment le cas des points de signalisation 4', 5', 6' qui sont utilisés pour des premières liaisons 17' de signalisation n° 7, pour gérer l'accès au réseau des abonnés raccordés aux unités 1', 2', 3', au centre de rattachement 7'.

Les unités 1', 2', 3' comportent en outre respectivement des points de signalisation supplémentaires 31, 32, 33 reliés à des entrées-sorties du centre de rattachement 7' par des secondes liaisons 39 de signalisation n° 7, conformes à l'interface dite de réseau intelligent. Le centre de rattachement 7' relie les liaisons 39 à un point de signalisation supplémentaire 43, dans le point de commande 8', par des liaisons semi-permanentes 40. Les points de signalisation 31, 32, 33 et les liaisons 39-40 donnent aux unités 1', 2', 3' "l'intelligence" nécessaire pour effectuer un acheminement autonome de communications d'abonnés, c'est-à-dire permet au point de commande de service 8' de télécommander, dans lesdites unités, des fonctions de : traduction, taxation, signalisation, etc..., pour gérer : des connexions établies par ladite unité entre des abonnés reliés à la même unité, ou des connexions vers une autre unité de raccordement, ou des connexions vers le réseau public 9', sans que ces connexions nécessitent une liaison par le centre de rattachement 7'.

Par ailleurs, le réseau est analogue à celui décrit précédemment et représenté sur la figure 1, sauf qu'il existe des liaisons téléphoniques supplémentaires : 34, 35 reliant directement les unités de raccordement entre elles ; et 36, 37, 38 reliant directement lesdites unités 2' à des centres locaux 40, 41, 42, du réseau public 9'. Les liaisons 34 et 35 permettent aux unités de raccordement de communiquer sans passer par le centre de rattachement 7'. Les liaisons 36, 37, 38 permettent aux unités de raccordement de communiquer avec les centres locaux 40, 41, 42 respectivement, sans passer par le centre 7' qui est généralement plus éloigné des unités de raccordement que les centres locaux 40 à 42.

Les unités de raccordement selon l'invention procurent donc : une réduction des coûts de transmission ; une grande souplesse d'organisation du réseau ; et une meilleure sécurité en permettant des communications locales même si les liaisons de parole 16' vers le centre de rattachement 7' sont coupées. Il est à remarquer que dans cet exemple de réseau, le point de commande des unités de raccordement est le point de commande 8' commandant le centre de rattachement 7' desdites unités de raccordement. Il n'est pas nécessaire de rajouter un point de commande supplémentaire pour les unités de raccordement. Le développement du réseau peut donc être poursuivi pratiquement sans coût supplémentaire pour commander des unités de raccordement supplémentaires.

Il est envisageable de réaliser un centre de commande indépendant du centre de rattachement, et ayant seulement pour fonction de gérer des unités de raccordement par télécommande au moyen de l'interface de réseau intelligent.

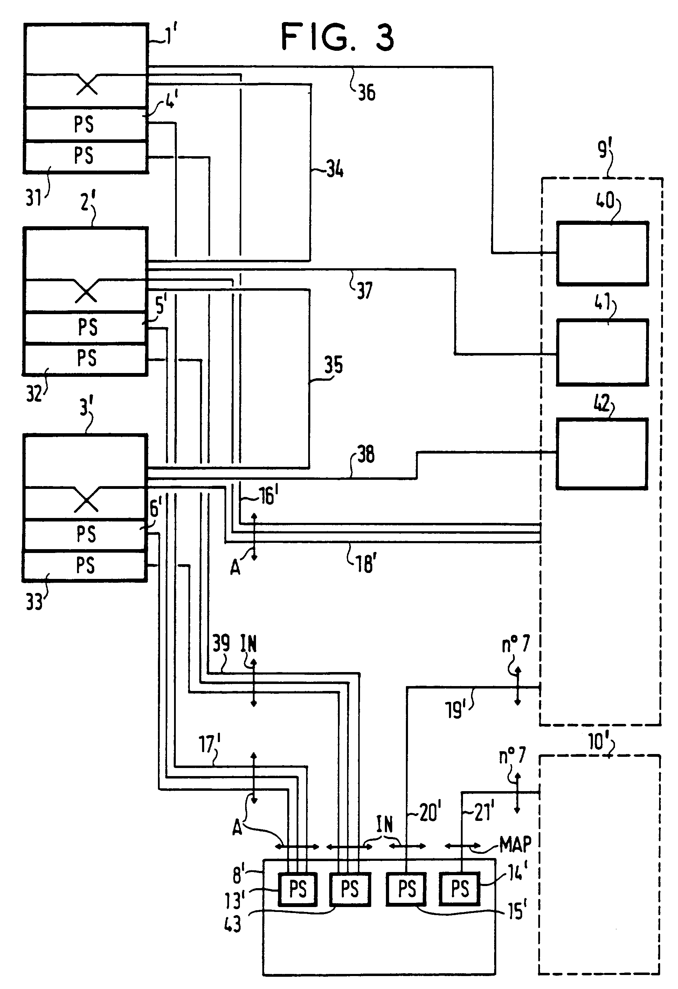

La figure 3 montre un exemple d'un tel réseau. Les éléments analogues à ceux de l'exemple précédemment décrit et représenté sur la figure 2 portent les mêmes références numériques. Il n'y a pas d'éléments supplémentaires. Le centre de rattachement 7' est supprimé. Les unités de raccordement 1', 2', 3' sont reliées directement au réseau public commuté 9' par les liaisons téléphoniques 16' et 18' qui sont connectés ensemble de manière permanente. Les liaisons de signalisation 20' et 19' sont connectées ensemble de manière permanente pour relier directement le point de signalisation 15' du point de commande de service 8' au réseau public 9'. Les liaisons semi-permanentes 40 et 23' sont remplacées par des liaisons permanentes reliant les points de signalisation 31, 32, 33 au point de signalisation 43 et reliant les points de signalisation 4', 5', 6' au point de signalisation 13'. Le point d'accès de chaque unité 1', 2', 3' vers le réseau 9' est alors l'un des commutateurs du réseau 9', non représentés sur la figure.

La liaison directe du point de signalisation 15' du point de commande 8', au réseau public commuté 9', telle que décrite précédemment en référence à la figure 3, peut être appliquée aussi à l'exemple de réseau représenté sur la figure 2. Dans ce cas, le point de signalisation 11' serait déplacé du centre 7' au point de commande 8'. Le point de signalisation 11' serait alors relié au réseau public commuté 9' par des liaisons semi-permanentes à travers le centre de rattachement 7'. Les messages de signalisation destinés au centre 7' transiteraient par les points de signalisation 15' puis 12' pour atteindre le centre 7'.

Dans les exemples de réseaux décrits ci-dessus en référence aux figures 2 et 3, des points de signalisations supplémentaires 31, 32, 33, 43 sont adjoints aux points de signalisation classiques 4', 5', 6', 13', pour acheminer une seconde liaison de signalisation n° 7, supportant l'interface réseau intelligent. Selon une variante de réalisation les points de signalisation 4' et 31, ainsi que leurs homologues, seraient confondus. De même, les points de signalisation 13' et 43 seraient confondus. En effet, le système de signalisation n°7 permet de transmettre plusieurs types de signalisation n°7, au moyen de différents protocoles, sur un même canal n°7. La première et la seconde liaison de signalisation n°7, 17' et 39, peuvent donc être supportées physiquement par un même canal de signalisation n°7, et par un même point de signalisation.

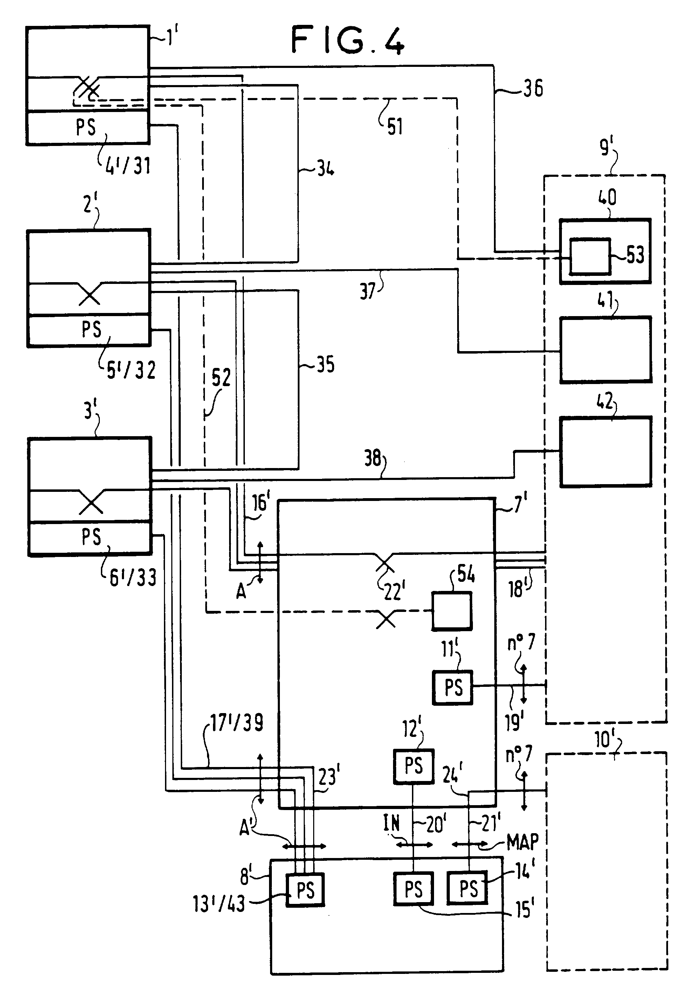

Sur la figure 4, d'une manière générale, tous les éléments déjà présents à la figure 2 ont conservé leur référence, sauf les exceptions indiquées plus loin. La présente description se bornera donc aux éléments additionnels faisant l'objet de la présente invention.

Les unités de raccordement 1', 2', 3', par rapport à celles de la figure 2, ne comportent plus chacune qu'un point de signalisation PS, 4'/31, 5'/32, 6'/33, regroupant les fonctionnalités des deux points de signalisation respectifs précédents. Ces points de signalisation uniques sont respectivement reliés par les liaisons de signalisation n°7 17'/39 au point de commande de service 8'. Par l'intermédiaire des connexions semi-permanentes 23', dans le centre de rattachement 7', ces liaisons de signalisation 17'/39 sont connectées à un seul point de signalisation 13'/43 dans le point de commande de service 8'. Le protocole appliqué, A', est étendu pour permettre la télécommande de l'unité de raccordement et comprend les fonctionnalités de l'interface d'accès des abonnés au centre de rattachement, par exemple l'interface A du GSM, et au moins un sous-ensemble de celles de l'interface du réseau intelligent ou d'un équivalent fonctionnel de celui-ci.

De telles dispositions permettent de faire, à peu de frais l'économie d'un protocole dans les communications entre unités de raccordement et point de commande de service.

Par ailleurs, une unité de raccordement 1' au moins, est connectée par une liaison de signaux de service 52 au centre de rattachement 7', dans lequel cette liaison de signaux de service 52 est connectée, de façon semi-permanente à un générateur de tonalités et de messages vocaux 54.

L'unité de raccordement 1' reçoit ainsi du centre de rattachement 7', les tonalités qui lui sont nécessaires pour répondre aux besoins du service à fournir aux abonnés, dans l'établissement de connexions entre abonnés d'une même unité de raccordement d'abonnés ou d'unités de raccordement d'abonnés voisines interconnectées par des liaisons de communication directes telles que 34 et 35, ou encore de centres locaux proches du réseau public commuté atteints par des liaisons directes telles 36, 37 et 38.

La liaison de signaux de service en question comprendra une voie de parole par tonalité ou message vocal et fera partie des liaisons de communication 16' reliant l'unité de raccordement d'abonnés 1' au centre de rattachement 7'. Elle sera dupliquée de préférence, pour des raisons de sécurité.

La figure 4 représente également une autre solution au même problème, qui peut être utilisée, à la place ou à côté de la solution précédente, et selon laquelle une liaison de signaux de service 51 conduit à un générateur de tonalités et de messages vocaux 53 d'un centre local 40 du réseau public commuté 9'. Dans ce cas la duplication de la liaison n'est pas nécessaire, en particulier si elle est supportée par les mêmes moyens que la voie de signalisation entre l'unité de raccordement et le central local.

Les générateurs 53, 54 peuvent être ceux qui sont normalement prévus dans les centres locaux et le centre de rattachement, ce qui rend la solution présentée particulièrement économique.

Des dispositions semblables peuvent être prévues entre l'unité de raccordement 1, considérée et chacun des centres locaux auxquels elle est reliée, tels que 41, 42.

Toutes les unités de raccordement d'abonnés peuvent être traitées de la façon que l'on vient de décrire.

Les moyens ainsi décrits peuvent être aisément aménagés pour permettre, par télécommande de l'unité de raccordement 1', par exemple, par la liaison de signalisation 17'/39, l'établissement d'une connexion de transfert prolongeant une communication provenant du centre local 40 et empruntant la liaison de communication 36, vers l'unité de raccordement 2', par exemple, par la liaison directe 34, puis, plus tard et de la même manière, le cas échéant, vers une autre unité de raccordement, telle que 3' et ceci, par exemple, pour suivre le déplacement d'un abonné mobile.

Le renvoi de la première unité de raccordement considérée, 1', peut également s'effectuer vers une autre unité de raccordement, non représentée sur la figure, dépendant d'un autre centre de rattachement que celui de la figure. Pour faire face aux exigences de cette situation, les centres de rattachement sont aménagés pour échanger les informations nécessaires pour la télécommande des deux unités de raccordement concernées (telles que 1'), par enrichissement du protocole de signalisation circulant sur une liaison de signalisation (21' par exemple) qui les relie.

Le renvoi de la communication vers le centre de rattachement 7', par une des liaisons de communication 16', à partir de l'une quelconque des unités de raccordement peut être également prévu.

La portée de l'invention n'est pas limitée aux exemples de réseau décrits ci-dessus. Elle est applicable aux unités de raccordement d'autres réseaux de télécommunication ayant une structure de réseau intelligent.

## Revendications

1. Unité de raccordement d'abonnés, à autonomie d'acheminement, pour un réseau de télécommunication (7' à 10') ayant une structure de réseau intelligent, ce réseau comportant des commutateurs (7') commandés par des points de commande de service (8') au moyen d'opérations prédéterminées appelées interface de réseau intelligent, supportées par des protocoles compatibles avec le protocole n° 7 du C.C.I.T.T ; reliée à : un commutateur (7') dit centre de rattachement, par des liaisons téléphoniques (16') ; et à un point de commande de service (8') par une première liaison de signalisation n° 7 classique (17') pour gérer l'accès des abonnés au centre de rattachement (7') ;
caractérisée en ce qu'elle est reliée en outre à un point de commande de service (8') par une seconde liaison de signalisation n° 7 (39) supportant l'interface de réseau intelligent (IN), pour gérer, par ledit point de commande de service (8) : des connexions établies par ladite unité (1', 2', 3') entre des abonnés reliés à la même unité, ou des connexions (34, 35) établies vers une autre unité, ou des connexions (36 à 38) établies vers le réseau (9'), sans que ces connexions nécessitent une liaison par le centre de rattachement (7').

2. Unité de raccordement selon la revendication 1, caractérisée en ce que le point de commande de service (8') auquel elle est reliée par une liaison (39) supportant l'interface de réseau intelligent, est constitué par le point de commande (8') commandant le centre de rattachement (7') de ladite unité de raccordement (1', 2', 3').

3. Unité de raccordement selon la revendication 1, caractérisée en ce que le point de commande de service (8') auquel elle est reliée par une liaison (39) supportant l'interface de réseau intelligent, est indépendant du centre de rattachement de ladite unité (1', 2', 3') ; et en ce que le point de commande de service (8') est relié directement à un réseau public commuté (9') par une liaison de signalisation n° 7 classique (19', 20').

4. Unité de raccordement selon la revendication 1, caractérisée en ce que la première et la seconde liaison de signalisation n° 7 (17', 39) sont supportées physiquement par un même canal de signalisation n° 7 et par un même point de signalisation.

5. Unité de raccordement d'abonnés conforme à l'une quelconque des revendications 1 à 4, caractérisée en ce qu'elle est en outre reliée, par des liaisons semi-permanentes (51, 52) au centre de ratachement (7') et/ou un ou plusieurs centres locaux (40, 41, 42) du réseau public commuté (9'), sur les voies desquelles lui sont fournies, à partir de générateurs prévus dans ces centres (53, 54), des tonalités et messages à transmettre aux abonnés, quand l'exploitation le demande.

6. Unité de raccordement d'abonnés conforme à la revendication 4, caractérisée en ce que lesdites premières et secondes liaisons de signalisaticn (17'/39) sont non seulement supportées physiquement par un même canal de signalisation n°7, mais aussi emploient un même protocole entre un seul point de signalisation (4'/31) dans l'unité de raccordement et un seul point de signalisation (13'/43) dans le point de commande de service (8'), lequel, pour permettre la télécommande de l'unité de raccordenient, comprend les fonctionnalités de l'interface d'accès des abonnés au centre de rattachement, par exemple l'interface A du GSM, et au moins un sous-ensemble de celles de l'interface du réseau intelligent (IN) ou d'un équivalent fonctionnel de celui-ci.

7. Unité de raccordement d'abonnés conforme à l'une quelconque des revendications 1 à 6, caractérisée en ce que les moyens définis précédemment sont aménagés pour permettre, par télécommande d'une première et d'une deuxième unités de raccordement (1', 2'), par les liaisons de signalisation (17'/39) les reliant à leur centre de rattachement (7'), l'établissement d'une connexion de transfert prolongeant une communication provenant d'un centre local (40) et empruntant une liaison de communication directe (36) entre ce centre local et ladite première unité de raccordement (1'), vers la deuxième unité de raccordement (2'), laquelle dépend du même centre de rattachement ou non, par une liaison directe entre les deux unités de raccordement considérées, puis, plus tard et de la même manière, le cas échéant, vers une troisième unité de raccordement (3' par exemple).

8. Unité de raccordement d'abonné conforme à la revendication 7, caractérisée en ce que, pour le cas où lesdites première et deuxième unités de raccordement dépendent de centres de rattachement (tels que 7') différents, ces derniers sont aménagés pour échanger les informations nécessaires pour la télécommande des deux unités de raccordement concernées (telles que 1'), par enrichissement du protocole de signalisation circulant sur une liaison de signalisation (21' par exemple) qui les relie.

9. Unité de raccordement conforme à l'une quelconque des revendications du brevet 1 à 8, caractérisée en ce que les moyens définis dans celles-ci sont aménagés pour permettre, par télécommande d'une première unité de raccordement (1'), par la liaison de signalisation (17'/39) provenant du centre de rattachement (7'), l'établissement d'une connexion de transfert prolongeant une communication provenant d'un centre local (40) et empruntant une liaison de communication directe (36) entre ce centre local et ladite première unité de raccordement, vers le centre de rattachement (7'), par une liaison de communication accessible pour permettre à cette unité de raccordement d'atteindre le centre de rattachement.

## Patentansprüche

1. Teilnehmer-Anschlußeinheit mit Leitwegautonomie für ein Fernmeldenetz (7' bis 10') mit einer intelligenten Netzstruktur, wobei dieses Netz Vermittlungsschalter (7') enthält, die von Dienststeuerpunkten (8') mit Hilfe von vorbestimmten Operationen gesteuert werden, die intelligente Netzschnittstelle genannt werden und von mit dem Protokoll N° 7 des CCITT kompatiblen Protokollen unterstützt werden, wobei die Einheit an einem Vermittlungsschalter (7'), auch Anschlußzentrale genannt, über Telefonverbindungen (16') und an einen Dienststeuerpunkt (8') über eine erste klassische Signalisierungsverbindung (17') vom Typ N° 7 angeschlossen ist, um den Zugang der Teilnehmer zur Anschlußzentrale (7') zu verwalten, dadurch gekennzeichnet, daß die Einheit außerdem an einen Dienststeuerpunkt (8') über eine zweite Signalisierungsverbindung (39) vom Typ N° 7 angeschlossen ist, die die intelligente Netzschnittstelle (IN) unterstützt, um über den Dienststeuerpunkt (8) Verbindungen, die durch die Einheit (1', 2', 3') zwischen an die gemeinsame Einheit angeschlossenen Teilnehmern hergestellt werden, oder Verbindungen (34, 35) zu verwalten, die zu einer anderen Einheit führen, oder auch Verbindungen (36 bis 38), die zum öffentlichen Vermittlungsnetz (9') führen, ohne daß diese Verbindungen über die Anschlußzentrale (7') verlaufen würden.

2. Anschlußeinheit nach Anspruch 1, dadurch gekennzeichnet, daß der Dienststeuerpunkt (8'), an den sie über eine die intelligente Netzschnittstelle unterstützende Verbindung (39) angeschlossen ist, aus dem Steuerpunkt (8') besteht, der die Anschlußzentrale (7') der Anschlußeinheit (1', 2', 3') steuert.

3. Anschlußeinheit nach Anspruch 1, dadurch gekennzeichnet, daß der Dienststeuerpunkt (8'), an den die Einheit über eine die intelligente Netzschnittstelle unterstützende Verbindung (39) angeschlossen ist, von der Anschlußzentrale der Einheit (1', 2', 3') unabhängig ist und daß der Dienststeuerpunkt (8') unmittelbar an ein öffentliches Vermittlungsnetz (9') über eine klassische Signalisierungsverbindung (19', 20') vom Typ N° 7 angeschlossen ist.

4. Anschlußeinheit nach Anspruch 1, dadurch gekennzeichnet, daß die erste und zweite Signalisierungsverbindung (17', 39) vom Typ N° 7 physisch durch einen gemeinsamen Signalisierungskanal vom Typ N° 7 und durch einen gemeinsamen Signalisierungspunkt unterstützt werden.

5. Teilnehmer-Anschlußeinheit nach einem beliebigen der Ansprüche 1 bis 4, dadurch gekennzeichnet, daß sie außerdem über halbpermanente Verbindungen (51, 52) an die Anschlußzentrale (7') und/oder eine oder mehrere örtliche Zentralen (40, 41, 42) des öffentlichen drahtgebundenen Netzes (9') angeschlossen ist, auf deren Kanälen von in diesen Zentralen (53, 54) vorgesehenen Generatoren Tonsignale und an die Teilnehmer zu übermittelnde Durchsagen geliefert werden, wenn der Betrieb dies erfordert.

6. Teilnehmer-Anschlußeinheit nach Anspruch 4, dadurch gekennzeichnet, daß die ersten und zweiten Signalisierungsverbindungen (17'/39) nicht nur physisch durch einen gemeinsamen Signalisierungskanal vom Typ N° 7 unterstützt werden, sondern auch ein gemeinsames Protokoll zwischen einem gemeinsamen Signalisierungspunkt (4'/31) in der Anschlußeinheit und einem gemeinsamen Signalisierungspunkt (13'/43) in dem Dienststeuerpunkt (8') verwenden, das für die Fernsteuerung der Anschlußeinheit Funktionalitäten der Zugangsschnittstelle der Teilnehmer zur Anschlußzentrale, beispielsweise die Schnittstelle A der GSM, und mindestens eine Untereinheit von Funktionalitäten der intelligenten Netzschnittstelle (IN) oder eines funktionalen Äquivalents dieser Schnittstelle enthält.

7. Teilnehmer-Anschlußeinheit nach einem beliebigen der Ansprüche 1 bis 6, dadurch gekennzeichnet, daß die oben definierten Mittel so ausgebildet sind, daß sie mittels Fernsteuerung einer ersten und einer zweiten Anschlußeinheit (1', 2') über die Signalisierungsverbindungen (17'/39), die sie mit ihrer Anschlußzentrale (7') verbinden, eine Transferverbindung aufbauen, die eine Gesprächsverbindung von einer örtlichen Zentrale (40) verlängert und eine direkte Verbindung (36) zwischen dieser örtlichen Zentrale und der ersten Anschlußeinheit (1') sowie der zweiten Anschlußeinheit (2') herstellt, die von der gleichen Anschlußzentrale abhängt oder auch nicht, und zwar über eine direkte Verbindung zwischen den beiden betrachteten Anschlußeinheiten und dann auf gleiche Weise ggf. zu einer dritten Anschlußeinheit (z.B. 3').

8. Teilnehmer-Anschlußeinheit nach Anspruch 7, dadurch gekennzeichnet, daß die erste und die zweite Anschlußeinheit, wenn sie von unterschiedlichen Anschlußzentralen (z.B. 7') abhängen, so ausgebildet sind, daß sie die für die Fernsteuerung der beiden betroffenen Anschlußeinheiten (z.B. 1') erforderlichen Informationen durch Erweiterung des Signalisierungsprotokolls austauschen, das auf einer sie verbindenden Signalisierungsverbindung (z.B. 21') zirkuliert.

9. Anschlußeinheit nach einem beliebigen der Patentansprüche 1 bis 8, dadurch gekennzeichnet, daß die in diesen Ansprüchen definierten Mittel so ausgebildet sind, daß durch Fernsteuerung einer Anschlußeinheit (1') über die von der Anschlußzentrale (7') kommende Signalisierungsverbindung (17'/39) eine Transferverbindung aufgebaut werden kann, die eine von einer örtlichen Zentrale (40) kommende Gesprächsverbindung verlängert und eine direkte Gesprächsverbindung (36) zwischen dieser örtlichen Zentrale und der ersten Anschlußeinheit zur Anschlußzentrale (7') über eine Verbindung verwendet, die zugänglich ist, um diese Anschlußeinheit die Anschlußzentrale erreichen zu lassen.

## Claims

1. A subscriber connection unit having independent routing ability for a telecommunications network (7' to 10') having an intelligent network structure, said network including exchanges (7') controlled by service control points (8') by means of predetermined operations called "intelligent network interface", and conveyed by protocols that are compatible with CCITT protocol No. 7; the subscriber connection unit being connected to a "parent" exchange (7') via telephone links (16') and to a service control point (8') via a first conventional No. 7 signalling link (17') for controlling subscriber access to the parent exchange (7');
the subscriber connection unit being characterized in that it is also connected to a service control point (8') via a No. 7 signalling link (39) conveying the intelligent network interface (IN) for the purpose of enabling said service control point (8) to control connections established by said unit (1', 2', 3') between subscribers connected to the same unit or connections (34, 35) established to another unit, or connections (36 to 38) established to the network (9') without these connections requiring a link via the parent exchange (7').

2. A connection unit according to claim 1, characterized in that the service control point (8') to which it is connected via a link (39) conveying the intelligent network interface is constituted by the control point (8') controlling the parent exchange (7') of said connection unit (1', 2', 3').

3. A connection unit according to claim 1, characterized in that the service control point (8') to which it is connected via a link (39) conveying the intelligent network interface is independent from the parent exchange of said unit (1', 2', 3'); and in that the service control point (8') is directly connected to a switched public network (9') via a conventional No. 7 signalling link (19', 20').

4. A connection unit according to claim 1, characterized in that the first and second No. 7 signalling links (17', 39) are physically conveyed by the same No. 7 signalling channel and by the same signalling point.

5. A subscriber connection unit according to any one of claims 1 to 4, characterized in that it is further connected via semi-permanent links (51, 52) to the parent exchange (7') and/or to one or more local exchanges (40, 41, 42) of the switched public network (9'), with channels of said connection(s) serving to convey tones and messages for transmission to subscribers from generators provided in said exchanges (53, 54), whenever operating conditions so require.

6. A subscriber connection unit according to claim 4, characterized in that said first and second signalling links (17'/39) are not only physically conveyed by the same No. 7 signalling channel, but also use the same protocol between a single signalling point (4'/31) in the connection unit and a single signalling point (13'/43) in the service control point (8'), which protocol, for the purposes of enabling the connection to be remotely controlled, includes interface functions for giving access to the subscribers of the connection unit, e.g. GSM.interface A, and at least a subset of the functions of the intelligent network interface (IN) or of a functional equivalent thereof.

7. A subscriber connection unit according to any one of claims 1 to 6, characterized in that the above-defined means are adapted to enable a transfer connection to be established under remote control of first and second connection units (1', 2') via the signalling links (17'/39) connecting them to their parent exchange (7'), to extend a call coming from a local exchange (40) and conveyed by a direct communication link (36) between said local exchange and said first connection unit (1') to the second connection unit (2') which may or may not depend from the same parent exchange, via a direct link between the two connection units under consideration, and then subsequently and in the same way, where applicable, to extend the calls to a third connection unit (e.g. 3').

8. A subscriber connection unit according to claim 7, characterized in that when said first and second connection units depend from different parent exchanges (such as 7'), then the parent exchanges are adapted to interchange the information required for remotely controlling the two connection units concerned (such as 1') by extending the signalling protocol conveyed over a signalling link (e.g. 21') interconnecting them.

9. A connection unit according to any one of claims 1 to 8, characterized in that the means defined therein are adapted to enable a transfer connection to be established under remote control of a first connection unit (1') via the signalling link (17'/39) from the parent exchange (7'), to extend a call from a local exchange (40) and conveyed via a direct communication link (36) between said local exchange and said first connection unit to the parent exchange (7') via an accessible communication link to enable said connection unit to reach the parent exchange.
